# EUROPÄISCHE PATENTSCHRIFT

(11) **EP 2 112 354 B1**
(45) Veröffentlichungstag und Bekanntmachung des Hinweises auf die Patenterteilung: **18.02.2015**
(21) Anmeldenummer: 08007972.6
(22) Anmeldetag: 24.04.2008
(51) Int. Cl.: F02D 9/02, F02B 27/02, F02M 35/10

(54) **Luftansaugvorrichtung für eine Brennkraftmaschine, insbesondere in einem Kraftfahrzeug**
Air intake device for a combustion engine, in particular in a motor vehicle
Dispositif d'aspiration de l'air pour un moteur à combustion interne, en particulier dans un véhicule automobile

(43) Veröffentlichungstag der Anmeldung: 28.10.2009
(73) Patentinhaber: Röchling Automotive SE & Co. KG, 68165 Mannheim (DE)
(72) Erfinder: Chini, Fabrizio Dr., 38060 Isera (IT); Greco, Antonio, 10060 None (IT)
(74) Vertreter: RLTG

(56) Entgegenhaltungen:
- EP-A- 1 310 662
- EP-A- 1 362 998
- DE-A1-102004 036 524
- DE-A1-102006 025 889
- JP-A- 9 125 968

## Beschreibung

Die vorliegende Erfindung betrifft eine Luftansaugvorrichtung für eine Brennkraftmaschine gemäß dem Oberbegriff von Anspruch 1. Eine solche Luftansaugvorrichtung umfasst eine Luftfiltervorrichtung zur Reinigung der Ansaugluft, eine Drosselvorrichtung zur Veränderung der Luftansaugmenge, eine primäre Saugrohranordnung, welche die Drosselvorrichtung und die Brennkraftmaschine luftströmungsübertragend verbindet, sowie eine sekundäre Saugrohranordnung, welche die Luftfiltervorrichtung und die Drosselvorrichtung luftströmungsübertragend verbindet, wobei wenigstens eine Strömungsgröße, welche das Luftströmungsverhalten der Luftansaugvorrichtung beeinflusst, insbesondere eine Strömungsgeometrie, besonders bevorzugt die Strömungslänge oder/und der Strömungsquerschnitt oder/und der Strömungsverlauf, wenigstens einer Saugrohranordnung veränderbar ist.

Wenigstens eine Strömungsgröße der sekundären Saugrohranordnung ist wahlweise veränderbar.

Die sekundäre Saugrohranordnung ist weiter entfernt vom Motorblock und insbesondere vom Zylinderblock angeordnet als die primäre Saugrohranordnung, so dass für ihre Unterbringung im Motorraum größere konstruktive Freiheiten bestehen als für die primäre Saugrohranordnung.

Darüber hinaus braucht in der sekundären Saugrohranordnung nicht wie bei der primären Saugrohranordnung für jeden Zylinder der Brennkraftmaschine ein eigener Rohrabschnitt bereitgestellt werden, was den zur Bildung einer erfindungsgemäßen Luftansaugvorrichtung notwendigen Bauaufwand verringert.

Schließlich können durch den geringeren Bauaufwand bei im Wesentlichen gleicher Kapazität zur Optimierung von Leistung und Drehmoment der Brennkraftmaschine die in der Luftansaugvorrichtung auftretenden Strömungsverluste verringert werden, was an der gattungsgemäßen Luftansaugvorrichtungen des Standes der Technik zu einem höheren Gesamtwirkungsgrad führt.

Konstruktiv wird wahlweise Veränderbarkeit von Strömungsgrößen der sekundären Saugrohranordnung beispielsweise dadurch erreicht, dass die sekundäre Saugrohranordnung genau zwei unterschiedliche Strömungswege durch sie hindurch sowie ein Strömungsleitmittel zum Durchleiten einer luftströmung durch wenigstens einen dieser Strömungswege aufweist.

Das Strömungsleitmittel weist ein in eine Mehrzahl von unterschiedlichen Strömungsleitstellungen bewegliches Schott auf.

Derartige Luftansaugvorrichtungen werden ganz allgemein an Brennkraftmaschinen eingesetzt, um den Luftbedarf der Brennkraftmaschine optimal zu regeln, und zwar insbesondere abhängig vom Betriebszustand der Brennkraftmaschine.

Aus dem Stand der Technik sind gattungsgemäße Luftansaugvorrichtungen aus der EP 1 310 662 A bekannt.

Durch die Veränderung von Strömungsgrößen des primären Saugrohrs kann die Leistung und das Drehmoment der Brennkraftmaschine optimiert werden, weil durch Veränderung von Strömungsgrößen beispielsweise Resonanzeffekte im primären Saugrohr derart genutzt werden können, dass sie die Luftzufuhr zur Brennkraftmaschine unterstützen. Dadurch kann die der Brennkraftmaschine pro Zeiteinheit zugeführte Menge an Ansaugluft in vorbestimmten Betriebszuständen der Brennkraftmaschine verglichen mit einer primären Saugrohranordnung mit unveränderbaren Strömungsgrößen erhöht werden.

Es ist objektive Aufgabe der vorliegenden Erfindung, eine gattungsgemäße Luftansaugvorrichtung derart weiterzubilden, dass die Strömungseigenschaften der Luftansaugvorrichtung in stärkerem Maße als bisher im Stand der Technik möglich veränderbar sind.

Diese Aufgabe wird gelöst durch eine Luftansaugvorrichtung der eingangs genannten Art, bei welcher das Strömungsleitmittel dazu ausgebildet ist, eine Luftströmung wahlweise durch einen dieser Strömungswege hindurch zu leiten. Dabei kann in vorteilhafter Weise die Möglichkeit zur Variation der strömungsmechanischen und strömungsdynamischen Eigenschaften der sekundären Saugrohranordnung dadurch erweitert sein, dass das Strömungsleitmittel zusätzlich dazu ausgebildet ist, eine Luftströmung durch beide Strömungswege gleichzeitig hindurch zu leiten, so dass für die sekundäre Saugrohranordnung dann wenigstens drei unterschiedliche Betriebszustände bestehen können.

In diesem Zusammenhang kann auch daran gedacht sein, das Strömungsleitmittel zwischen einer ersten Extremstellung, in welcher eine Luftströmung in einen ersten Strömungsweg eingeleitet wird und ein vom ersten verschiedener zweiter Strömungsweg für die Luftströmung abgesperrt ist, und einer zweiten Extremstellung, in welcher eine Luftströmung in den zweiten Strömungsweg eingeleitet wird, während der erste Strömungsweg für die Luftströmung gesperrt ist, kontinuierlich verstellbar vorzusehen.

Zusätzlich kann daran gedacht sein, zur Veränderung von Strömungsgrößen der sekundären Saugrohranordnung an dieser eine Membran als Bestandteil des Strömungsleitmittels vorzusehen, welche in unterschiedliche Strömungsleitstellungen bringbar ist. Diese Membran kann somit dazu ausgebildet und angeordnet sein, abhängig von ihrer Strömungsleitstellung einen Strömungsquerschnitt der sekundären Saugrohranordnung zu verändern.

Während das oben beschriebene Schott durch einen Aktuator, etwa einen Elektromotor, verstellbar sein kann, kann die Membran mechanisch durch einen Aktuator, etwa einen Elektromotor, pneumatisch oder hydraulisch etwa durch eine Kolbenzylinderanordnung und dergleichen, oder fluidisch durch eine wahlweise mit einem vorbestimmten Druck beaufschlagbare Druckkammer betätigt sein. Der vorbestimmte Druck kann auch ein Unterdruck sein. Im letzten Fall der mit Druck beaufschlagbaren Kammer kann die Membran selbst eine Wandung der Druckkammer bilden, was zu einem besonders einfachen konstruktiven Aufbau der Druckkammer führt. Als Fluid zur Druckbeaufschlagung der Druckkammer kann ein Gas oder/und eine Flüssigkeit verwendet werden.

Grundsätzlich können an der sekundären Saugrohranordnung beliebige Größen geändert werden, welche das Strömungsverhalten von Ansaugluft in der sekundären Saugrohranordnung beeinflussen. In der Praxis am einfachsten realisierbar ist dabei eine Veränderung der Länge oder/und des Querschnitts eines Strömungswegs.

Die zwei Strömungswege der sekundären Saugrohranordnung unterscheiden sich durch wenigstens eine Strömungsgröße. Hierzu kann die sekundäre Saugrohranordnung zwei Strömungswege mit unterschiedlicher Strömungslänge aufweisen.

Strömungswege mit unterschiedlichen Strömungslängen können auf sehr engem Bauraum in vorteilhafter Weise dadurch kompakt bereitgestellt werden, dass die sekundäre Saugrohranordnung gekrümmt ausgebildet ist und der kürzere Strömungsweg zumindest abschnittsweise bezogen auf den Krümmungsmittelpunkt radial weiter innen gelegen ist als der längere Strömungsweg. Alternativ oder zusätzlich kann ein Längenunterschied der Strömungswege auch durch Schrägstellung von Endflanschen der sekundären Saugrohranordnung zueinander erreicht werden. Dies gilt auch für eine geradlinig verlaufende Saugrohranordnung. Ebenso können zusätzlich oder alternativ Strömungswege der sekundären Saugrohranordnung mit parallelen Endflanschen, jedoch mit unterschiedlicher Länge ausgebildet sein. Die unterschiedlichen Längen der Strömungswege der sekundären Saugrohranordnung können dann baulich durch eine entsprechend komplementäre Bauform eines Gehäuses der Luftfiltervorrichtung oder/und eines Gehäuses der Drosselvorrichtung ausgeglichen werden.

Alternativ oder zusätzlich kann zur wahlweisen Veränderbarkeit von Strömungsgrößen der sekundären Saugrohranordnung auch daran gedacht sein, dass die sekundäre Saugrohranordnung wenigstens zwei Strömungswege mit unterschiedlichem Strömungsquerschnitt aufweist.

Um einen der beiden Strömungswege mit möglichst geringen Strömungsverlusten betreiben zu können, ist zur möglichst guten Ausnutzung von Resonanzfeldern im Strömungsweg bei hohen Drehzahlen des Verbrennungsmotors vorteilhafterweise der kürzere der beiden Strömungswege mit dem größeren Strömungsquerschnitt ausgebildet. Um Resonanzeffekte auch bei niedrigen Drehzahlen zur Unterstützung der Luftzufuhr zum Verbrennungsmotor hin nutzen zu können, ist der längere der beiden Strömungswege mit dem kleineren Strömungsquerschnitt ausgebildet.

Mit "Schott" ist in dieser Anmeldung jede Art von Gegenstand bezeichnet, welcher geeignet ist, eine Luftströmung umzulenken oder/und einen durchströmbaren Querschnitt zu verändern oder/und gewünschtenfalls einen Strömungsweg vollständig zu versperren. Aufgrund ihrer einfachen Betreibbarkeit ist eine schwenkbare Klappe, wie etwa eine Drosselklappe, als das oben bezeichnete Schott bevorzugt.

Grundsätzlich kann daran gedacht sein, dass die sekundäre Saugrohranordnung zwei gesondert ausgebildete Rohrleitungen aufweist, wobei jede Rohrleitung wenigstens einen Strömungsweg definiert. Diese Lösung bietet die bestmögliche Anpassung von wahlweise an der sekundären Saugrohranordnung einstellbaren Strömungseigenschaften an die Anforderungen der Brennkraftmaschine. Gleichzeitig ist jedoch der Bauaufwand erhöht.

Aus Sicht einer kompakten Bauweise bevorzugt ist daher eine Ausführungsform, bei welcher die sekundäre Saugrohranordnung wenigstens ein sekundäres Saugrohr aufweist, in welchem eine Mehrzahl von Strömungswegen integral ausgebildet ist. Diese kann wenigstens teilweise aus Kunststoffbauteilen gebildet sein. Dabei bieten sich insbesondere spritzgegossene Kunststoffbauteile an, die in beliebige Gestalt gebracht werden können, wobei ihre Fertigung für hohe Stückzahlen besonders wirtschaftlich ist.

Eine aufgrund ihrer kompakten Bauweise bei gleichzeitig niedrigen Herstellkosten besonders bevorzugte Ausführungsform ist der Gestalt, dass das sekundäre Saugrohr wenigstens zwei miteinander gefügte Schalenbauteile umfasst, welche zur Bildung der Saugrohrwandung und der Strömungswege darin beitragen.

Die vorliegende Erfindung wird nachfolgend anhand von Ausführungsbeispielen erläutert, welche in den beiliegenden Figuren gezeigt sind. Es stellt dar:
- Fig. 1: eine perspektivische Darstellung einer sekundären Saugrohranordnung gemäß einer ersten Ausführungsform der Erfindung,
- Fig. 1a: eine schematische Darstellung einer erfindungsgemäßen Luftansaugvorrichtung,
- Fig. 2: die Ausführungsform von Fig. 1 in einer perspektivischen Ansicht, jedoch aus anderer Blickrichtung,
- Fig. 3: einen Querschnitt durch den Auslaufabschnitt der sekundären Saugrohranordnung des ersten Ausführungsbeispiels in einer die Schwenkachse eines Strömungsleitmittels enthaltenden Querschnittsebene,
- Fig. 4: eine perspektivische Ansicht eines Saugrohr-Hauptkörperabschnitts einer sekundären Saugrohranordnung einer zweiten Ausführungsform,
- Fig. 4a: einen Längsschnitt durch die zweite Ausführungsform einer sekundären Saugrohranordnung mit dem Saugrohr-Hauptkörperabschnitt von Fig. 4,
- Fig. 5: eine perspektivische Explosionsansicht des Auslaufabschnitts der zweiten Ausführungsform von Fig. 4a,
- Fig. 6: eine vergrößerte perspektivische Darstellung einer als Strömungsleitmittel verwendeten Luftklappe,
- Fig. 7: eine dritte Ausführungsform einer erfindungsgemäßen sekundären Saugrohranordnung, bei welcher eine Membran zur Veränderung des Strömungsquerschnitts dient,
- Fig. 8: eine perspektivische Darstellung einer Unterbaugruppe der sekundären Saugrohranordnung gemäß der dritten Ausführungsform von Fig. 7,
- Figuren 9a und 9b: Querschnittsdarstellungen der dritten Ausführungsform der Figuren 7 und 8.

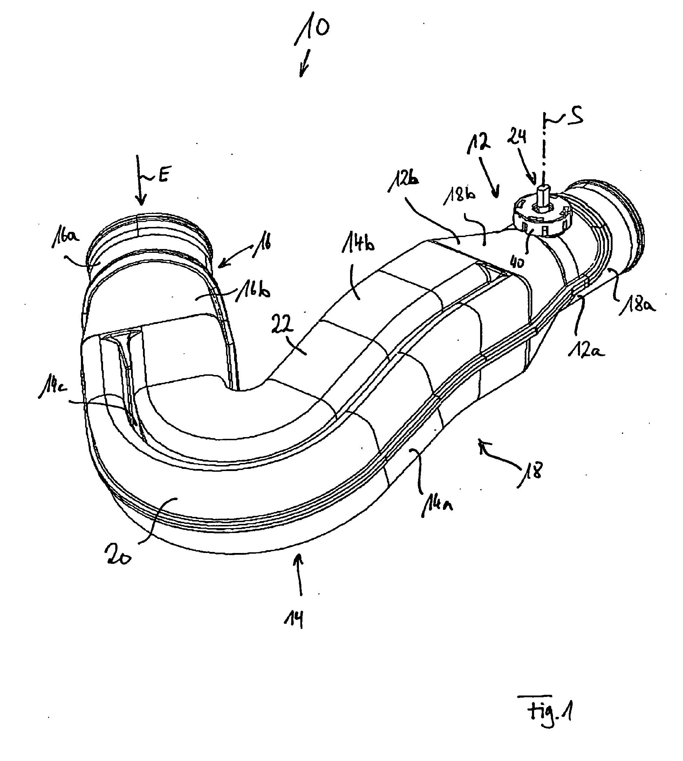

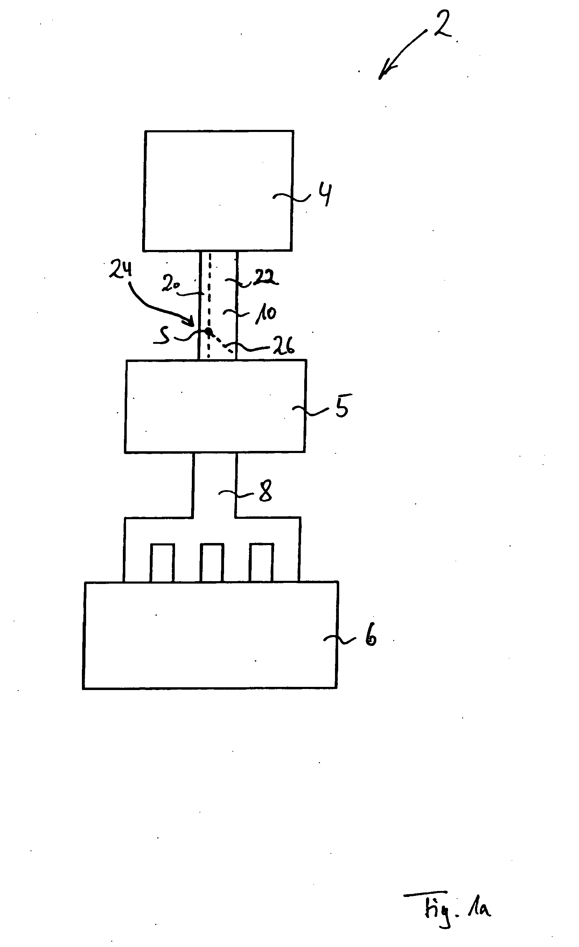

In Fig. 1a ist eine erfindungsgemäße Luftansaugvorrichtung allgemein mit 2 bezeichnet. Diese Luftansaugvorrichtung 2 umfasst einen Luftfilter 4, eine Drosselvorrichtung 5 und einen Motorblock 6 einer Brennkraftmaschine mit vier Zylindern.

In an sich bekannter Weise saugen die Zylinder des Motorblocks 6 in einem ihrer vier Takte Ansaugluft an, welche mit Kraftstoff vermischt wird. Dieses Kraftstoff-Luft-Gemisch wird anschließend verdichtet und gezündet.

Die Ansaugluft durchströmt als erstes den Luftfilter 4 und wird dort gereinigt.

Ausgehend vom Luftfilter 4 durchströmt die Ansaugluft eine sekundäre Saugrohranordnung 10 und gelangt so zu der Drosselvorrichtung 5, in welcher der Luftstrom in geeigneter Weise, etwa durch verstellbare Drosselklappen, abhängig von einer Eingabe des Benutzers, etwa über ein Gaspedal, eingestellt wird. Von der Drosselvorrichtung 5 strömt der Ansaugluftstrom über die primäre Saugrohranordnung 8 den einzelnen Zylindern des Motorblocks 6 zu.

In Fig. 1 ist eine erste Ausführungsform der sekundären Saugrohranordnung 10 gezeigt. Die sekundäre Saugrohranordnung 10 umfasst einen Saugrohr-Auslaufabschnitt 12, einen Saugrohr-Hauptkörperabschnitt 14 und einen Saugrohr-Einlaufabschnitt 16. Das Gehäuse 18 der sekundären Saugrohranordnung 10 ist aus zwei jeweils einstückigen spritzgegossenen Kunststoffteilen 18a (Unterschale) und 18b (Oberschale) zusammengesetzt.

Die Unterschale 18a weist einen Hauptkörperabschnitt 14a, einen Auslaufabschnitt 12a und einen Einlaufabschnitt 16a auf.

Ebenso weist die einstückige Oberschale 18b einen Hauptkörperabschnitt 14b, einen Auslaufabschnitt 12b und einen Einlaufabschnitt 16b auf.

Die beiden Hauptkörperabschnitte 14a und 14b der Unterschale 18a und der Oberschale 18b des Saugrohr-Hauptkörperabschnitts 14 weisen über ihre gesamte Länge eine Einsenkung auf, wobei in Fig. 1 nur die Einsenkung 14c des Hauptkörperabschnitts 14b der Oberschale 18b zu erkennen ist.

Die Einsenkungen in den Hauptkörperabschnitten 14a und 14b der Schalenteile 18a und 18b des Gehäuses 18 definieren zusammen einen ersten Strömungskanal 20 und einen von diesem getrennten zweiten Strömungskanal 22 durch den Saugrohr-Hauptkörperabschnitt 14 hindurch. Dabei ist der erste Strömungskanal 20 an dem gekrümmt ausgebildeten Saugrohr-Hauptkörperabschnitt 14 bezogen auf dessen Krümmungsachse radial weiter außen angeordnet und weist daher einen längeren Strömungsweg auf als der radial weiter innen gelegene zweite Strömungskanal 22. Der zweite Strömungskanal 22 weist demgegenüber einen größeren Strömungsquerschnitt auf, so dass der zweite Strömungskanal 22 aufgrund seines größeren Strömungsquerschnitts und seines kürzeren Strömungswegs einen geringeren Strömungswiderstand und andere Resonanzzustände aufweist als der erste Strömungskanal 22.

Die sekundäre Saugrohranordnung 10 von Fig. 1 wird vom Einlaufabschnitt 16 zum Auslaufabschnitt 12 hin von Luft durchströmt. Im an einer Brennkraftmaschine, insbesondere eines Kraftfahrzeugs, angeordneten Zustand verbindet die sekundäre Saugrohranordnung 10 eine Luftfiltervorrichtung und eine Drosselvorrichtung der Luftansaugvorrichtung der Brennkraftmaschine so, dass Luft von der Luftfiltervorrichtung über die sekundäre Saugrohranordnung 10 zur Drosselvorrichtung strömen kann.

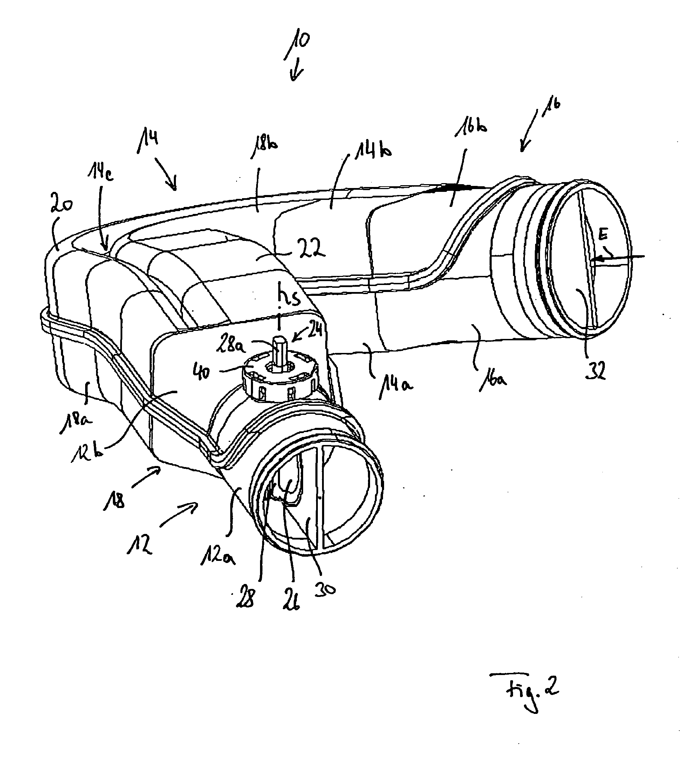

Im Auslaufabschnitt 12 der sekundären Saugrohranordnung 10 ist überdies eine um eine Schwenkachse S schwenkbare Luftklappe 26 (s. Fig. 2) als Strömungsleitmittel 24 aufgenommen, um eine die sekundäre Saugrohranordnung 10 in Richtung des Pfeils E durchströmende Ansaugluft abhängig von der Betriebsstellung der Luftklappe 26 entweder über den ersten Strömungskanal 20, den zweiten Strömungskanal 22 oder über beide Strömungskanäle 20 und 22 gleichzeitig zur Drosselvorrichtung zu leiten.

In Fig. 2 ist die sekundäre Saugrohranordnung 10 der ersten Ausführungsform in einer anderen Perspektive als in Fig. 1 dargestellt.

In Fig. 2 ist das Strömungsleitmittel 24 im Auslaufabschnitt 12 besser zu erkennen als in Fig. 1. Dieses umfasst ein Luftklappenblatt 26, welches starr mit einer Luftklappenwelle 28 verbunden ist, im gezeigten Beispiel sogar einstückig ausgebildet ist.

Von der Luftklappenwelle 28 ragt ein Wellenstumpf 28a mit Abflachungen am Umfang aus dem Auslaufabschnitt 12 der sekundären Saugrohranordnung 10 heraus. An den Wellenstumpf 28a mit Abflachungen kann ein Antrieb zur Verstellung der Luftklappe 26 drehmomentübertragend angekoppelt werden.

Die Luftklappe 26 ist in Fig. 2 in ihrer mittleren Stellung dargestellt, in welcher die sekundäre Saugrohranordnung 10 in Richtung des Pfeils E durchströmende Ansaugluft über sowohl den ersten Strömungskanal 20 als auch den zweiten Strömungskanal 22 zur nicht dargestellten Drosselvorrichtung geleitet.

Sowohl der Auslaufabschnitt 12 als auch der Einlaufabschnitt 16 weisen einen inneren Steg 30 bzw. 32 auf, welche den vom Auslaufabschnitt 12 bzw. vom Einlaufabschnitt 16 gebildeten Strömungskanal in zwei Unterkanäle unterteilen.

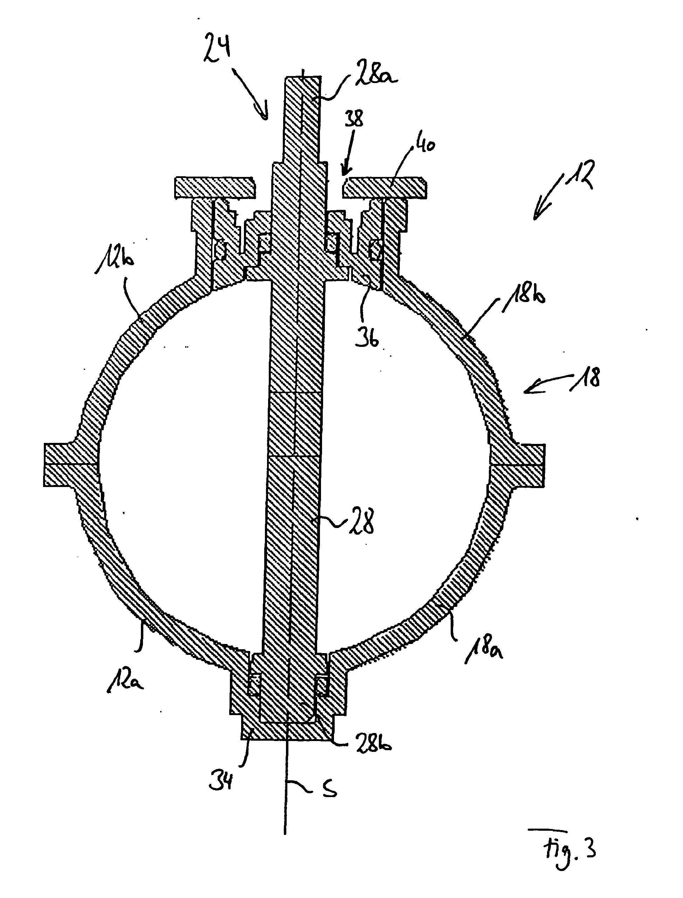

Fig. 3 zeigt einen Querschnitt durch den Auslaufabschnitt 12 der sekundären Saugrohranordnung 10, und zwar in einer Querschnittsebene, welche die Schwenkachse S der Luftklappe 26 enthält.

Die Luftklappenwelle 28 ist mit ihrem vom Wellenstumpf 28a entfernt gelegenen Längsende 28b in einer topfförmigen Ausnehmung 34 der Einlaufteil-Unterschale 18a aufgenommen.

Die Unterschale 18a und die Oberschale 18b des Gehäuses 18 der sekundären Saugrohranordnung 10 sind miteinander verklebt oder durch Ultraschallschweißen miteinander verschweißt oder in ähnlicher Weise miteinander gefügt.

An dem dem Wellenstumpf 28a näheren Längsende der Luftklappenwelle 28 ist diese von einem Einsatz 36 umgeben, welcher in eine Öffnung 38 in der Oberschale 18b eingesetzt und durch einen Verschluss 40 in dieser gesichert ist.

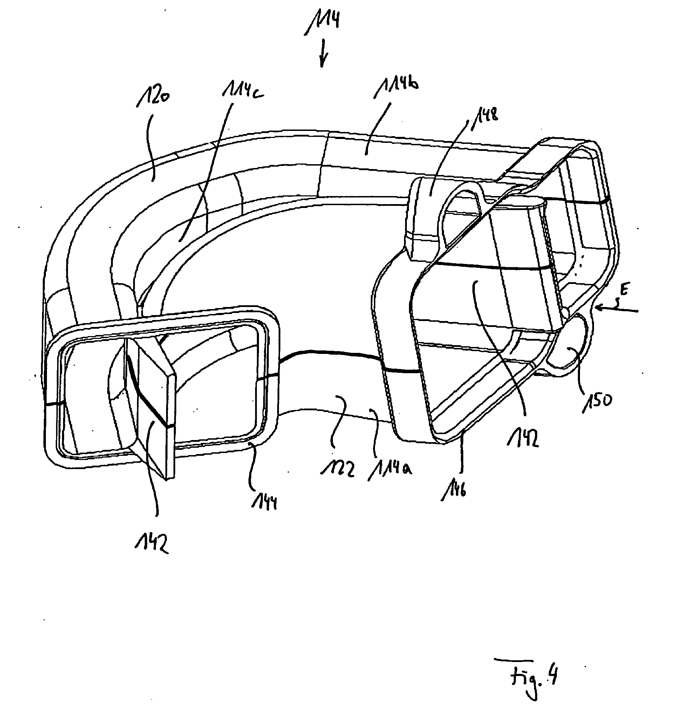

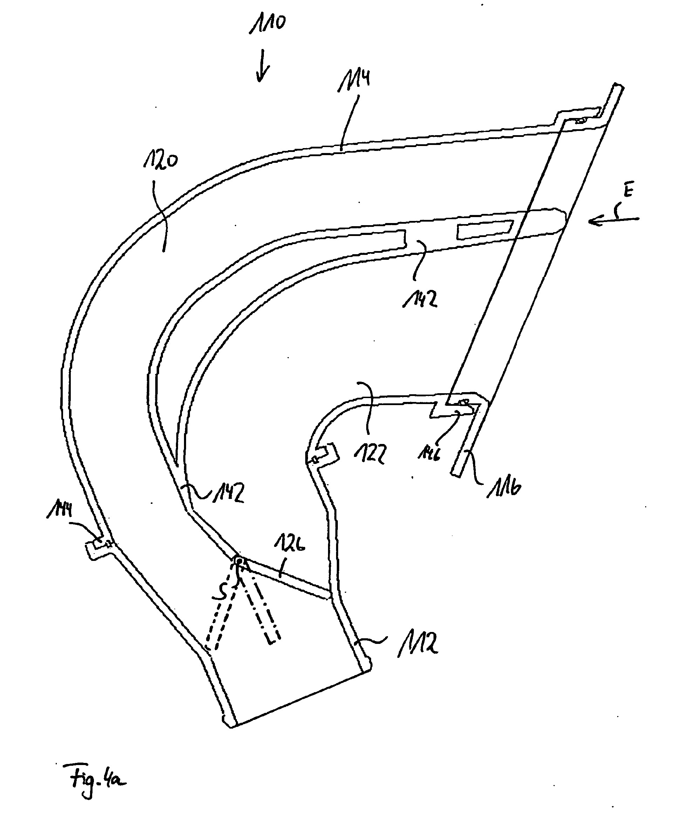

In Fig. 4 ist eine zweite Ausführungsform einer sekundären Saugrohranordnung 10, insbesondere eines Saugrohr-Hauptkörperabschnitts 114 dargestellt. Gleiche Bauteile der zweiten Ausführungsform einer sekundären Saugrohranordnung gemäß der vorliegenden Erfindung sind mit gleichen Bezugszeichen versehen wie jene der ersten Ausführungsform, jedoch erhöht um die Zahl 100. Die zweite Ausführungsform wird nur insofern beschrieben werden, als sie sich von der ersten Ausführungsform unterscheidet, auf deren Beschreibung ansonsten ausdrücklich verwiesen wird.

Der Saugrohr-Hauptkörperabschnitt 114 der zweiten Ausführungsform weist lediglich eine geringfügig andere Gestalt auf als jener der ersten Ausführungsform. Dennoch weist auch der Saugrohr-Hauptkörperabschnittabschnitt 114 der zweiten Ausführungsform einen bezogen auf eine Krümmungsachse des Saugrohr-Hauptkörperabschnitts 114 radial weiter außen gelegenen längeren ersten Strömungskanal 120 mit kleinerem Strömungsquerschnitt auf und weist einen radial weiter innen gelegenen kürzeren zweiten Strömungskanal 122 mit größerem Strömungsquerschnitt auf. Zu erkennen ist der den ersten Strömungskanal 120 vom zweiten Strömungskanal 122 trennende Steg 142, welcher abschnittsweise, wie schon bei der ersten Ausführungsform, durch eine Materialeinsenkung 114c gebildet ist.

Zur Anbindung eines gesonderten Einlaufteils und eines gesonderten Auslaufteils weist der Saugrohr-Hauptkörperabschnitt 114 Flansche 146 und 144 auf. Darüber hinaus sind an dem Flansch 146 Befestigungsösen 148 und 150 einstückig ausgebildet, mit welchen die den Saugrohr-Hauptkörperabschnitt 114 aufweisende sekundäre Saugrohranordnung 110 in der Umgebung der Brennkraftmaschine, insbesondere am Luftfildergehäuse, welcher sie Ansaugluft zuführt, befestigbar ist.

In Fig. 4a ist ein Längsschnitt orthogonal zur Schwenkachse S der Luftklappe 126 dargestellt. Darüber hinaus zeigt Fig. 4a die gesamte sekundäre Saugrohranordnung 110 mit gesondert ausgebildetem Auslaufabschnitt 112, Saugrohr-Hauptkörperabschnitt 114 und gesondert ausgebildetem Einlaufabschnitt 116. Die sekundäre Saugrohranordnung 110 kann jedoch auch wie die erste Ausführungsform durch lediglich eine Oberschale und eine Unterschale mit integral zusammenhängenden Funktionsabschnitten ausgebildet sein.

Die Luftklappe 126, welche in Fig. 4a mit durchgezogenem Strich in einer Stellung gezeigt ist, in welcher der zweite Strömungskanal 122 für Ansaugluft gesperrt ist und die gesamte Ansaugluft durch den ersten Strömungskanal 120 strömt, ist in die strichliniert gezeigte Stellung von Fig. 4a verstellbar, in welcher der erste Strömungskanal 120 für Ansaugluft gesperrt ist und die gesamte Ansaugluft durch den zweiten Strömungskanal 122 hindurch strömt.

Weiterhin ist die Luftklappe 126 zusätzlich in eine strichpunktiert dargestellte dritte Stellung verstellbar, in welcher Ansaugluft sowohl durch den ersten Strömungskanal 120 als auch durch den zweiten Strömungskanal 122 hindurch strömt.

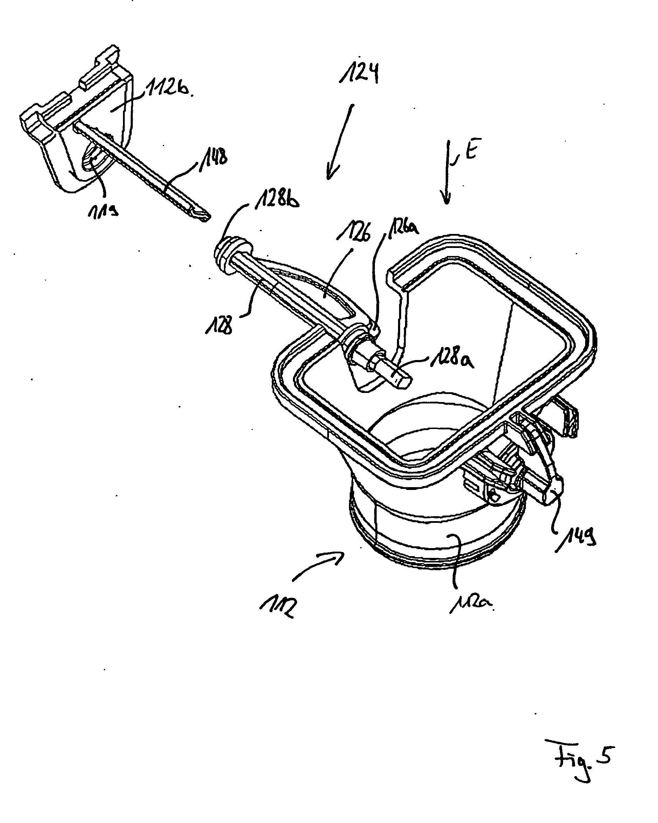

In Fig. 5 ist der Auslaufabschnitt 112 der sekundären Saugrohranordnung 110 der zweiten Ausführungsform von Fig. 4a perspektivisch dargestellt.

Man erkennt, dass zur besseren Strömungsleitung an der Oberschale 112b des Auslaufabschnitts 112 ein Strömungsleitteil 148 fest vorgesehen ist. Zur Drehmomentübertragung ist eine Kappe 149 vorgesehen, welche den Wellenstumpf 128a aufnimmt. Das andere Längsende 128b der Luftklappenwelle 128 ist in der Ausnehmung 119 der Oberschale 112b aufgenommen. Alternativ kann der Wellenstumpf 128a mit einem elektrisch oder fluidmechanisch betätigten Aktuator gekoppelt sein.

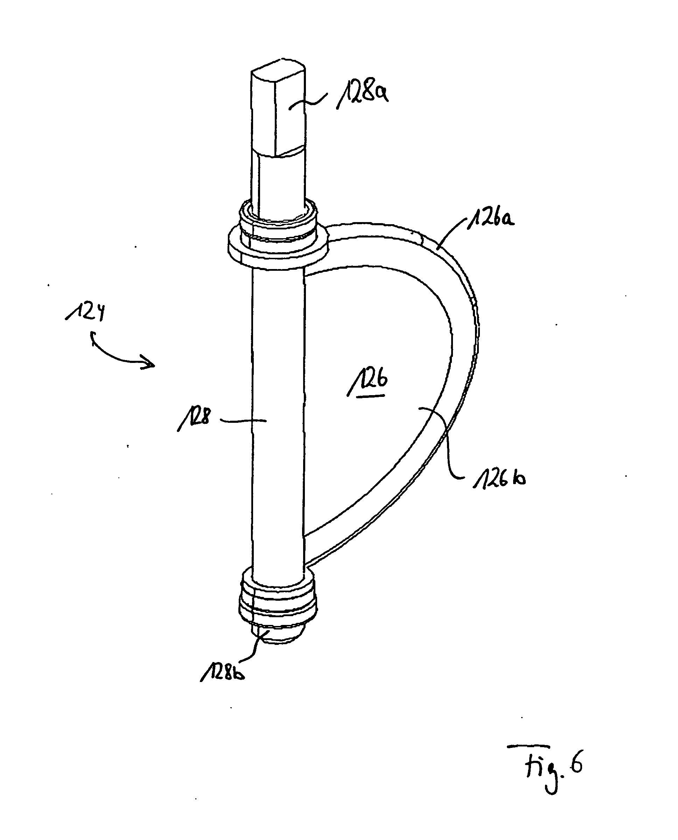

An der Luftklappe 126 ist, wie auch in Fig. 6, zu erkennen, dass diese vorzugsweise eine umlaufende Dichtlippe 126a aufweist, welche aus einem weichelastischen Material gebildet ist, das zumindest weicher als die Wandung des Auslaufabschnitts 112 ist, so dass sich dieses unter Verformung dicht an die Gehäuseinnenwandung des Auslaufabschnitts 112 anlegen kann.

Diese Dichtlippe 126a, welche in dem in Fig. 6 gezeigten Beispiel auch aus einem weicheren Material als der Luftklappen-Hauptkörper 126b gefertigt ist, kann auf den Luftklappen-Hauptkörper 126b aufgespritzt, aufvulkanisiert, aufgeklebt, aufgenietet oder sonstwie daran befestigt sein.

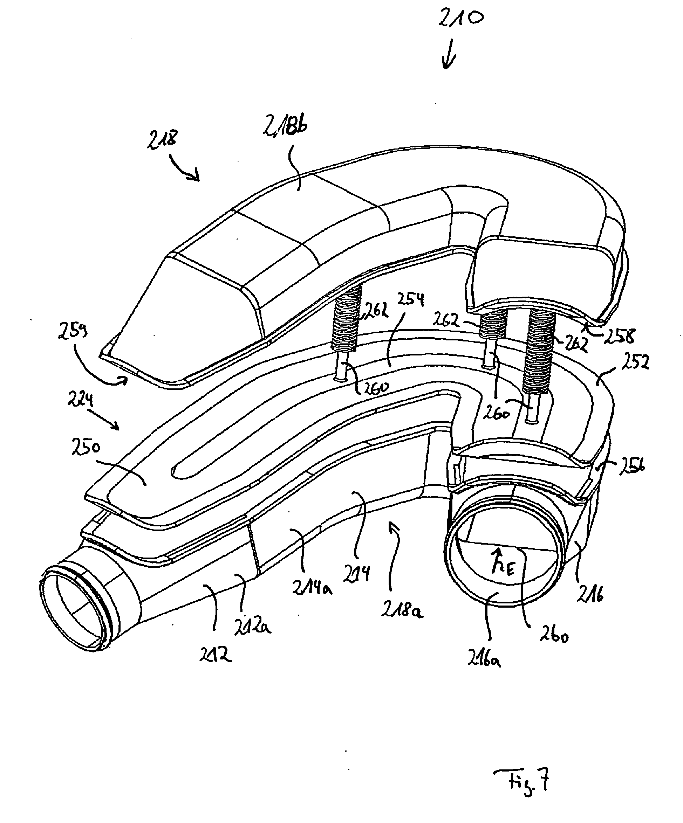

In Fig. 7 ist eine dritte Ausführungsform einer erfindungsgemäßen sekundären Saugrohranordnung 210 gezeigt. Gleiche Bauteile der dritten Ausführungsform sind mit gleichen Bezugszeichen versehen wie in der ersten oder zweiten Ausführungsform, jedoch erhöht um die Zahl 200 bzw. 100. Die dritte Ausführungsform wird lediglich insofern beschrieben werden, als sie sich von der ersten und der zweiten Ausführungsform unterscheidet, auf deren Beschreibung ansonsten ergänzend ausdrücklich verwiesen wird.

Das Gehäuse 218 des sekundären Saugrohrs 210 der dritten Ausführungsform, die in Fig. 7 gezeigt ist, weist eine einstückig ausgebildete Unterschale 218a mit den bekannten Funktionsabschnitten 212a, 214a und 216a auf, welche durch eine einstückig ausgebildete Oberschale 218b zu dem sekundären Saugrohr 210 ergänzt wird. Zwischen der Unterschale 218a des sekundären Saugrohrs 210 und der Oberschale 218b des Gehäuses 218 des sekundären Saugrohrs 210 ist als Strömungsleitmittel 224 eine elastische Membran 250 vorgesehen, welche sich in dem gezeigten Beispiel zwischen einem die Membran außen umgebenden härteren Randteil 252 und einem ebenfalls härteren zentralen Aktuatorteil 254 erstreckt.

Der härter als die Membran 250 ausgebildete Randteil 252 ist im montierten Zustand dicht zwischen einer Flanschfläche 256 der Unterschale 218a und einer Flanschfläche 258 der Oberschale 218b angeordnet und mit diesen in der Regel fest verbunden, etwa durch Verschweißen, Verkleben, Verklipsen und dergleichen. Alternativ kann der Randteil 252 auch aus dem Membranwerkstoff selbst gebildet sein. Insbesondere bei einem Verbinden durch Verklipsen von Ober- und Unterschale kann durch Einklemmen des Randteils 252 zwischen diesen eine dichte Verbindung erzeugt werden.

Der Aktuatorteil 254 weist Führungszapfen 260 auf, welche in entsprechenden, in Fig. 7 nicht dargestellten Buchsen der Oberschale 210b gleitend aufgenommen sind.

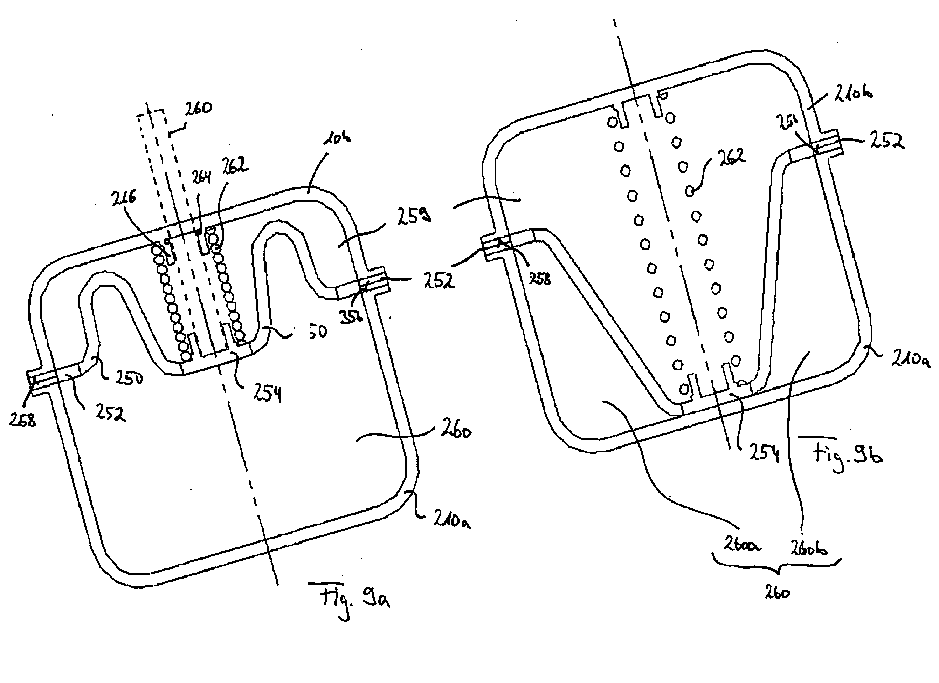

Zugfedern 262 sorgen für eine Vorspannung des Aktuatorteils in die in Fig. 9a gezeigte Stellung.

Grundsätzlich kann der Aktuatorteil 254 mechanisch durch einen an sich bekannten Aktuator entlang der Längsrichtung der Führungsstäbe 260 verstellt werden.

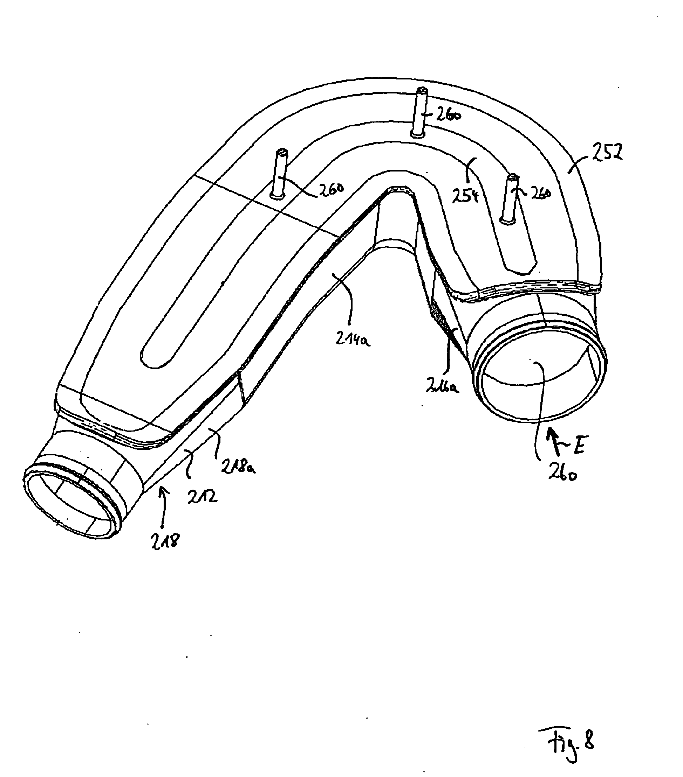

In den in den Figuren 7 bis 9b gezeigten Beispielen jedoch bildet die Membran 250 zusammen mit dem Randteil 252 und dem Aktuatorteil 254 und der Oberschale 218b des sekundären Saugrohrs 210 eine fluiddichte Druckkammer 259, welche durch einen in den Figuren 7 bis 9b nicht gezeigten Fluidzu- und -ablauf mit einem Druckfluid, etwa einem Gas oder einer Flüssigkeit, in unterschiedlich starkem Maß gefüllt werden kann, wodurch die Membran 250 gegen ihre eigene Materialelastizität oder/und gegen die Vorspannkraft der Zugfedern 262 aus der in Fig. 9a gezeigten Stellung bis zu der in Fig. 9b gezeigten Stellung verstellt werden kann. Grundsätzlich ist durch geeignete Druckfluidzu- und -abfuhr auch jede Zwischenstellung zwischen den in den Figuren 9a und 9b gezeigten Membranstellung möglich.

Somit kann der Querschnitt des Strömungskanals 260, welcher sich durch das sekundäre Saugrohr 210 hindurch erstreckt, ausgehend von seinem in Fig. 9a gezeigten größten Querschnitt verkleinert werden, bis er schließlich in der in Fig. 9b gezeigten Stellung aus zwei Teil-Strömungskanälen 260a und 260b zu einem Strömungskanal 260 mit minimalem Strömungsquerschnitt zusammengesetzt ist.

Die Führungsstäbe 260 sind in Fig. 9a nur schematisch und in Fig. 9b nicht dargestellt. Grundsätzlich kann auch daran gedacht sein, dass die Führungsstäbe 260 bei einer besonders langen Führungslänge die Oberschale 218b durchsetzen, wobei die Durchsetzungsöffnung selbstverständlich zur Druckkammer 259 hin abgedichtet ist. Dieser Fall ist schematisch in Fig. 9a dargestellt, wo eine O-Ring-Dichtung 264 in die Führungshülse 266 an der Innenseite der Oberschale 218b eingesetzt dargestellt ist. Der Führungsstab 260 kann auch vermieden werden, wenn die Feder 262, wie in Fig. 9b gezeigt, dazu ausgebildet ist, Abweichungen von der linearen Bewegung zu verringern oder sogar zu vermeiden. Dann weist die Feder 262 selbst Führungsfunktion auf.

Die Druckkammer 259 ist beispielsweise an ein Druckfluidreservoir über eine Förderpumpe mit einem Zulauf- und einem Ablaufventil, wie sie an sich bekannt sind, angeschlossen, welche in den Figuren 7 bis 9b jedoch nicht dargestellt sind. Das Ablaufventil kann im Falle der Verwendung von Luft als Druckfluid zur Umgebung öffnen. Die Druckkammer kann selbstverständlich unter Anpassung der Federn daran als Unterdruckkammer betrieben werden. Unterdruck steht an der Brennkraftmaschine stromabwärts der Drosselvorrichtung zur Verfügung.

## Patentansprüche

1. Luftansaugvorrichtung (2) für eine Brennkraftmaschine (6), umfassend eine Luftfiltervorrichtung (4) zur Reinigung der Ansaugluft, eine Drosselvorrichtung (5) zur Veränderung der Luftansaugmenge, eine primäre Saugrohranordnung (8), welche die Drosselvorrichtung (5) und eine Brennkraftmaschine (6) luftströmungsübertragend verbindet, sowie eine sekundäre Saugrohranordnung (10; 110; 210), welche die Luftfiltervorrichtung (4) und die Drosselvorrichtung (5) luftströmungsübertragend verbindet, wobei wenigstens eine Strömungsgröße, welche das Luftströmungsverhalten der Luftansaugvorrichtung beeinflusst, insbesondere eine Strömungsgeometrie, besonders bevorzugt die Strömungslänge oder/und der Strömungsquerschnitt oder/und der Strömungsverlauf, wenigstens einer Saugrohranordnung (8, 10; 110; 210) veränderbar ist, wobei wenigstens eine Strömungsgröße der sekundären Saugrohranordnung (10; 110; 210) wahlweise veränderbar ist, wobei ferner die sekundäre Saugrohranordnung (10; 110; 210) genau zwei unterschiedliche Strömungswege (20, 22; 120, 122; 260) durch sie hindurch sowie ein Strömungsleitmittel (24; 124; 224) zum Durchleiten einer Luftströmung durch wenigstens einen dieser Strömungswege (20, 22; 120, 122; 260) aufweist, wobei das Strömungsleitmittel (24; 124) ein in eine Mehrzahl von unterschiedlichen Strömungsleitstellungen bewegliches Schott, insbesondere eine schwenkbare Klappe (26; 126), aufweist, **dadurch gekennzeichnet, dass** das Strömungsleitmittel (24; 124) genauer dazu ausgebildet ist, eine Luftströmung wahlweise durch einen der zwei Strömungswege (20, 22; 120, 122) zu leiten und vorzugsweise zusätzlich dazu ausgebildet ist, eine Luftströmung wahlweise durch beide Strömungswege (20, 22; 120, 122) gleichzeitig zu leiten.

2. Luftansaugvorrichtung nach Anspruch 1,
**dadurch gekennzeichnet, dass** das bewegliche Schott dazu ausgebildet ist, eine Luftströmurig wahlweise durch einen der beiden Strömungswege zu leiten (20, 22; 120, 122) und den jeweils anderen Strömungsweg (20, 22; 120, 122) vollständig zu versperren.

3. Luftansaugvorrichtung nach Anspruch 1 oder 2,
**dadurch gekennzeichnet, dass** die sekundäre Saugrohranordnung (10; 110) zwei Strömungswege (20, 22; 120, 122) mit unterschiedlicher Strömungslänge aufweist.

4. Luftansaugvorrichtung nach Anspruch 3,
**dadurch gekennzeichnet, dass** die sekundäre Saugrohranordnung (10; 110) gekrümmt ausgebildet ist und der kürzere Strömungsweg (22; 122) zumindest abschnittsweise bezogen auf den Krümmungsmittelpunkt der sekundären Saugrohranordnung (10; 110) radial weiter innen gelegen ist als der längere Strömungsweg (20; 120).

5. Luftansaugvorrichtung nach einem der vorhergehenden Ansprüche,
**dadurch gekennzeichnet, dass** die sekundäre Saugrohranordnung (10; 110) zwei Strömungswege (20, 22; 120, 122) mit unterschiedlichem Strömungsquerschnitt aufweist, wobei vorzugsweise ein kürzerer der beiden Strömungswege (22; 122) zumindest abschnittsweise einen größeren Strömungsquerschnitt aufweist als ein längerer (20; 120).

6. Luftansaugvorrichtung nach einem der vorhergehenden Ansprüche,
**dadurch gekennzeichnet, dass** sie eine in eine Mehrzahl von in unterschiedliche Strömungsleitstellungen bringbare Membran (250) aufweist.

7. Luftansaugvorrichtung nach Anspruch 6,
**dadurch gekennzeichnet, dass** die Membran (250) dazu ausgebildet und angeordnet ist, abhängig von ihrer Strömungsleitstellung einen Strömungsquerschnitt der sekundären Saugrohranordnung (210) zu verändern.

8. Luftansaugvorrichtung nach Anspruch 6 oder 7,
**dadurch gekennzeichnet, dass** die Membran (250) mechanisch durch einen Aktuator oder fluidisch durch eine wahlweise mit einem vorbestimmten Druck, insbesondere Unterdruck, beaufschlagbare Druckkammer (259) betätigt ist.

9. Luftansaugvorrichtung nach einem der vorhergehenden Ansprüche,
**dadurch gekennzeichnet, dass** die sekundäre Saugrohranordnung (10; 110; 210) eine Mehrzahl von gesondert ausgebildet Rohrleitungen aufweist, wobei jede Rohrleitung wenigstens einen Strömungsweg definiert.

10. Luftansaugvorrichtung nach einem der vorhergehenden Ansprüche,
**dadurch gekennzeichnet, dass** die sekundäre Saugrohranordnung (10; 110; 210) wenigstens ein sekundäres Saugrohr (12, 14, 16; 112, 114, 116) aufweist, in welchem eine Mehrzahl von Strömungswegen (20, 22; 120, 122) integral ausgebildet ist.

11. Luftansaugvorrichtung nach Anspruch 10,
**dadurch gekennzeichnet, dass** das sekundäre Saugrohr (12, 14, 16; 112, 114, 116; 212, 214, 216) wenigstens teilweise, vorzugsweise überwiegend, aus Kunststoffbauteilen (18a, 18b; 118a, 118b; 218a, 218b), vorzugsweise spritzgegossenen Kunststoffbauteilen gebildet ist.

12. Luftansaugvorrichtung nach Anspruch 11,
**dadurch gekennzeichnet, dass** das sekundäre Saugrohr (12, 14, 16; 112, 114, 116; 212, 214, 216) wenigstens zwei miteinander gefügte, zur Bildung der Saugrohrwandung und der Strömungswege (20, 22; 120, 122; 260) darin beitragenden, vorzugsweise diese bildenden Schalenbauteile (18a, 18b; 118a, 118b; 218a, 218b) umfasst.

## Claims

1. Air intake device (2) for an internal combustion engine (6), comprising an air filter device (4) for cleaning the intake air, a choke device (5) for changing the amount of intake air, a primary suction pipe arrangement (8) which connects the choke device (5) and an internal combustion engine (6) in such a manner as to convey an airflow, and a secondary suction pipe arrangement (10; 110; 210) which connects the air filter device (4) and the choke device (5) in such a manner as to convey an airflow, it being possible to change at least one flow variable which influences the airflow behaviour of the air intake device, in particular a flow geometry, most preferably the flow length and/or the flow cross section and/or the flow course, of at least one suction pipe arrangement (8, 10; 110; 210), it being possible to selectively change at least one flow variable of the secondary suction pipe arrangement (10; 110; 210), the secondary suction pipe arrangement (10; 110; 210) further having precisely two different flow paths (20, 22; 120, 122; 260) through itself and a flow guiding means (24; 124; 224) for guiding an airflow through at least one of these flow paths (20, 22; 120, 122; 260), the flow guiding means (24; 124) having a partition, in particular a pivotable flap (26; 126), which is movable into a plurality of different flow guiding positions, **characterised in that** the flow guiding means (24; 124) is more precisely designed to selectively guide an airflow through one of the two flow paths (20, 22; 120, 122) and preferably is additionally designed to selectively guide an airflow through both flow paths (20, 22; 120, 122) at the same time.

2. Air intake device according to claim 1, **characterised in that** the movable partition is designed to selectively guide an airflow through one of the two flow paths (20, 22; 120, 122) and to completely block the respective other flow path (20, 22; 120, 122).

3. Air intake device according to either claim 1 or claim 2, **characterised in that** the secondary suction pipe arrangement (10; 110) comprises two flow paths (20, 22; 120, 122) having different flow lengths.

4. Air intake device according to claim 3, **characterised in that** the secondary suction pipe arrangement (10; 110) is curved and at least some portions of the shorter flow path (22; 122) are positioned radially further inwards than the longer flow path (20; 120), based on the centre of curvature of the secondary pipe arrangement (10; 110).

5. Air intake device according to any of the preceding claims, **characterised in that** the secondary suction pipe arrangement (10; 110) comprises two flow paths (20, 22; 120, 122) having different flow cross sections, at least some portions of a shorter flow path of the two flow paths (22; 122) preferably having a larger flow cross section than a longer flow path (20; 120).

6. Air intake device according to any of the preceding claims, **characterised in that** said device comprises a membrane (250) which can be moved into a plurality of different flow guiding positions.

7. Air intake device according to claim 6, **characterised in that** the membrane (250) is designed and arranged to change, depending on its flow guiding position, a flow cross section of the secondary suction pipe arrangement (210).

8. Air intake device according to either claim 6 or claim 7, **characterised in that** the membrane (250) is actuated either mechanically by an actuator or in a fluidic manner by a pressure chamber (259) to which a predetermined pressure, in particular a vacuum, can be selectively applied.

9. Air intake device according to any of the preceding claims, **characterised in that** the secondary suction pipe arrangement (10; 110; 210) comprises a plurality of separate pipelines, each pipeline defining at least one flow path.

10. Air intake device according to any of the preceding claims, **characterised in that** the secondary suction pipe arrangement (10; 110; 210) comprises at least one secondary suction pipe (12, 14, 16; 112, 114, 116), in which a plurality of flow paths (20, 22; 120, 122) are integrally formed.

11. Air intake device according to claim 10, **characterised in that** the secondary suction pipe (12, 14, 16; 112, 114, 116; 212, 214, 216) is formed at least in part, preferably predominantly, of plastics components (18a, 18b; 118a, 118b; 218a, 218b), preferably injection-moulded plastics components.

12. Air intake device according to claim 11, **characterised in that** the secondary suction pipe (12, 14, 16; 112, 114, 116; 212, 214, 216) comprises at least two shell components (18a, 18b; 118a, 118b; 218a, 218b) which are joined together and which contribute to the formation of the suction pipe wall and flow paths (20, 22; 120, 122; 260), preferably forming said suction pipe walls and flow paths.

## Revendications

1. Dispositif d'aspiration d'air (2) pour un moteur à combustion interne (6), comprenant un dispositif de filtre à air (4) pour l'épuration de l'air aspiré, un dispositif d'étranglement (5) pour le changement du débit d'aspiration d'air, un dispositif de tube d'aspiration primaire (8), qui relie le dispositif d'étranglement (5) et un moteur à combustion interne (6) en transportant un écoulement d'air, ainsi qu'un dispositif de tube d'aspiration d'air secondaire (10; 110; 210), qui relie le dispositif de filtre à air (4) et le dispositif d'étranglement (5) en transportant un écoulement d'air, dans lequel au moins une grandeur de l'écoulement, qui influence le comportement d'écoulement d'air du dispositif d'aspiration d'air, en particulier une géométrie de l'écoulement, de préférence la longueur de l'écoulement et/ou la section transversale mouillée et/ou le profil de l'écoulement, d'au moins un dispositif de tube d'aspiration (8, 10; 110; 210) est variable, dans lequel au moins une grandeur de l'écoulement du dispositif de tube d'aspiration secondaire (10; 110; 210) est variable au choix, dans lequel en outre le dispositif de tube d'aspiration secondaire (10; 110; 210) présente exactement deux chemins d'écoulement différents (20, 22; 120, 122; 260) qui le traversent ainsi qu'un moyen de guidage d'écoulement (24; 124; 224) pour la déviation d'un écoulement d'air à travers au moins un de ces chemins d'écoulement (20, 22; 120, 122; 260), dans lequel le moyen de guidage d'écoulement (24; 124) présente un volet mobile dans une multiplicité de positions de guidage d'écoulement différentes, en particulier un clapet pivotant (26; 126), **caractérisé en ce que** le moyen de guidage d'écoulement (24; 124) est plus exactement conçu pour guider au choix un écoulement d'air à travers un des deux chemins d'écoulement (20, 22; 120, 122) et est de préférence conçu en outre pour guider simultanément un écoulement d'air au choix à travers les deux chemins d'écoulement (20, 22; 120, 122).

2. Dispositif d'aspiration d'air selon la revendication 1, **caractérisé en ce que** le volet mobile est conçu pour guider un écoulement d'air au choix à travers un des deux chemins d'écoulement (20, 22; 120, 122) et pour fermer entièrement l'autre chemin d'écoulement respectif (20, 22; 120, 122).

3. Dispositif d'aspiration d'air selon la revendication 1 ou 2, **caractérisé en ce que** le dispositif de tube d'aspiration secondaire (10; 110) présente deux chemins d'écoulement (20, 22; 120, 122) avec une longueur d'écoulement différente.

4. Dispositif d'aspiration d'air selon la revendication 3, **caractérisé en ce que** le dispositif de tube d'aspiration secondaire (10; 110) est réalisé sous forme courbe et le chemin d'écoulement plus court (22; 122) est situé au moins partiellement, par rapport au centre de courbure du dispositif de tube d'aspiration secondaire (10; 110), radialement plus vers l'intérieur que le chemin d'écoulement plus long (20; 120).

5. Dispositif d'aspiration d'air selon l'une quelconque des revendications précédentes, **caractérisé en ce que** le dispositif de tube d'aspiration secondaire (10; 110) présente deux chemins d'écoulement (20, 22; 120, 122) avec une section transversale mouillée différente, dans lequel de préférence un plus court des deux chemins d'écoulement (22; 122) présente au moins partiellement une section transversale mouillée plus grande qu'un chemin d'écoulement plus long (20; 120).

6. Dispositif d'aspiration d'air selon l'une quelconque des revendications précédentes, **caractérisé en ce qu'**il présente une membrane (250) pouvant être placée dans une multiplicité de positions de guidage d'écoulement différentes.

7. Dispositif d'aspiration d'air selon la revendication 6, **caractérisé en ce que** la membrane (250) est conçue et disposée pour changer une section transversale mouillée du dispositif de tube d'aspiration secondaire (210) en fonction de sa position de guidage d'écoulement.

8. Dispositif d'aspiration d'air selon la revendication 6 ou 7, **caractérisé en ce que** la membrane (250) est actionnée mécaniquement par un actionneur ou fluidiquement par une chambre de pression (259) soumise au choix à une pression prédéterminée, en particulier à une dépression.

9. Dispositif d'aspiration d'air selon l'une quelconque des revendications précédentes, **caractérisé en ce que** le dispositif de tube d'aspiration secondaire (10; 110; 210) présente une multiplicité de conduits réalisés séparément, dans lequel chaque conduit définit au moins un chemin d'écoulement.

10. Dispositif d'aspiration d'air selon l'une quelconque des revendications précédentes, **caractérisé en ce que** le dispositif de tube d'aspiration secondaire (10; 110; 210) présente au moins un tube d'aspiration secondaire (12, 14, 16; 112, 114, 116), dans lequel une multiplicité de chemins d'écoulement (20, 22; 120, 122) sont intégralement formés.

11. Dispositif d'aspiration d'air selon la revendication 10, **caractérisé en ce que** le tube d'aspiration secondaire (12, 14, 16; 112, 114, 116; 212, 214, 216) est formé au moins partiellement, de préférence principalement, de composants en matière plastique (18a, 18b; 118a, 118b; 218a, 218b), de préférence de composants en matière plastique moulés par injection.

12. Dispositif d'aspiration d'air selon la revendication 11, **caractérisé en ce que** le tube d'aspiration secondaire (12, 14, 16; 112, 114, 116; 212, 214, 216) comprend au moins deux composants en coquille (18a, 18b; 118a, 118b; 218a, 218b) joints l'un à l'autre, contribuant à la formation de la paroi du tube d'aspiration et des chemins d'écoulement (20, 22; 120, 122; 260) dans celui-ci, et de préférence formant ceux-ci.
